# EUROPEAN PATENT SPECIFICATION

(11) **EP 0 708 510 B1**
(45) Date of publication and mention of the grant of the patent: **24.01.2001**
(21) Application number: 95202757.1
(22) Date of filing: 13.10.1995
(51) Int. Cl.: H02B 1/20, H02B 1/052

(54) **A switchboard for electrical installations**
Ein Schalttafel für elektrische Installationen
Un tableau de commutation pour installations électriques

(30) Priority: 17.10.1994 IT MI942111
(43) Date of publication of application: 24.04.1996
(73) Proprietor: BTICINO S.p.A., 20154 Milano (IT)
(72) Inventor: Fontana, Rodolfo, I-21100 Varese (IT)
(74) Representative: Maggioni, Claudio

(56) References cited:
- EP-A- 0 043 931
- EP-A- 0 109 881
- EP-A- 0 434 964
- EP-A- 0 467 170
- EP-A- 0 467 171
- EP-A- 0 472 409
- DE-A- 3 023 499
- FR-A- 2 348 591
- FR-A- 2 452 811
- FR-A- 2 453 521

## Description

The present invention relates to a switchboard for distribution to and protection of electrical installations, which includes a rail fixed in a box-like housing, a plurality of modular automatic switches adapted to be installed in a packed arrangement on the rail in a direction substantially perpendicular to a wall of the housing, and being simultaneously electrically connected by plug and socket means to an electrically conductive bus bar which is interposed between the wall and the switches and is removably coupled to a support fixed to the rail.

A switch board of this kind is disclosed for example in document EP-A-0472409. A similar arrangement in which, however, the bus bar is disposed generally alongside the switches, instead of being interposed between the mounting wall and the switches, is disclosed in document DE-A-3023499.

Another arrangement known from document EP-A-0467171 has the socket connection incorporated in the body of the switch, while the bus bars in their housing are interposed between the switches and the mounting wall and are provided with upwardly projecting plug-type contact members.

Document EP-A-0109881 discloses a double-sided rail for use in a distribution switchboard; on one side of the rail a plurality of switches are mounted and an the other side of the rail horizontal conductor arrays are mounted via brackets.

Switchboards for electrical installations, some of the essential elements of which have been indicated above, are known from document EP-A-0 434 964. In this document, in fact, the state of the art is first considered in relation to the simultaneous connection of modular switches by means of electrically conductive bus bars and, subsequently, the invention is described wherein a group of elements of a switchboard allow an advantageous simultaneous connection of the switches of this latter to be achieved by virtue of the particular arrangement of an electrically conductive bus bar together with the provision of connection means of the plug and socket type.

More specifically, going on from what is referred to in the description attached to the last-mentioned document, electrically conductive bus bars of the type mentioned are currently generally fixed to the back wall of the housing of the switchboard with screws which pass into the insulating sheath of the bar.

For this purpose the housings, which are generally also modular and made of either plastics or metal, must be provided with suitable holes or seats on the walls to which the electrically conductive bus bars are fixed. These holes are sometimes formed directly during production as when the housing is made of moulded plastics material, or subsequently with piercing operations which may also take place at the site where the switchboard is fitted. This technique of fixing the electrically conductive bus bar is, however, not satisfactory. In fact, especially from the point of view of industrial production and installation of the switchboards which, it must be recalled, are designed to be formed from modular standard components so as to limit production costs and allow simple and rapid installation to be achieved by ensuring, at the same time, the possibility of configuring them with shapes and dimensions such as to adapt them to different requirements, it has disadvantages which have in some way limited the diffusion of switchboards formed according to the teaching of document EP-A-0 434 964.

For example the provision of holes by moulding the housings in plastics material is difficult to manage in that their position and the spacing between them will not always be adapted to the different dimensions of electrically conductive bus bars which from time to time will be required; it is in fact evident that the number and polarity of contact blades of this latter, and therefore its dimensions, will in general depend on the number and type of modular switches which it is desired to connect. Therefore, for the purpose of allowing the bus bar to be fixed in all cases to prearranged holes it is sometimes necessary to use a larger and therefore more expensive bus bar than necessary. Obviously this difficulty could be overcome by increasing the number of holes but this arrangement is not always available for technical reasons of working of the pieces, or for reasons of cost.

Further, in the case of metal structures as mentioned above, which generally comprise a supporting framework surrounded by panels of sheet metal, the production of holes is not practicable; therefore, in this case in order to fix the bus bar use must be made of suitable supports essentially constituted by fillets which are applied to the structure in a manner similar to the rail which carries the switches, in a position interposed between these and the back wall of the structure. In particular the holes mentioned are formed on the supports upon installation of the switchboard; this implies a dual inconvenience: the first is constituted by the expenditure of assembly time for performing this operation; the second is represented by the possibility of an erroneous positioning of the bus bar thus mounted in relation to the switches. It is evident that, for a good coupling of the plug and socket contacts the said positioning is important and having to pierce the support at different times introduces a high probability of positioning error due to the human factor in performing the operation; then a similar error would involve making the holes again, with further loss of time.

The technical problem on which the present invention is based is that of devising a switchboard for distribution and protection of electrical systems, of the type considered above, which will be able to overcome the disadvantages mentioned in relation to the current state of the art; that is to say a switchboard with structural and functional characteristics such as to allow an electrically conductive bus bar to be mounted in a precise and rapid manner even when the type, dimensions or configuration of the switchboard itself varies.

This problem is solved according to the invention by a switchboard of the type discussed above and characterised in the first of the claims which follow this description.

In order better to understand further characteristics of the operation and advantageous aspects of the invention an exemplary embodiment is described hereinafter by way of non-limitative indication, illustrated in the attached drawings, in which:
Figure 1 is a perspective and partially sectioned view of a switchboard according to the invention;
Figure 2 illustrates, again in perspective view, a detail of the switchboard of Figure 1 with the parts shown separated; and

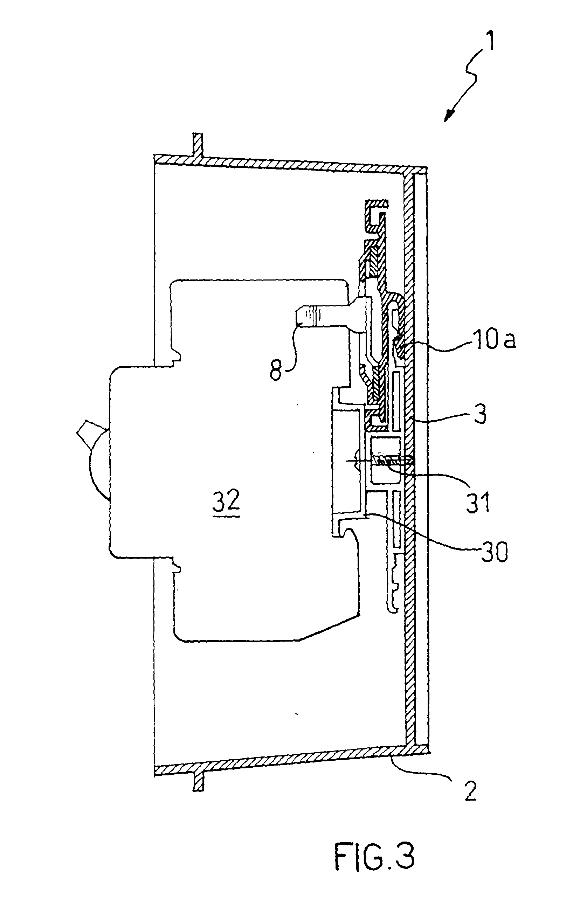

Figure 3 illustrates a sectioned side view of the switchboard of the preceding Figures.

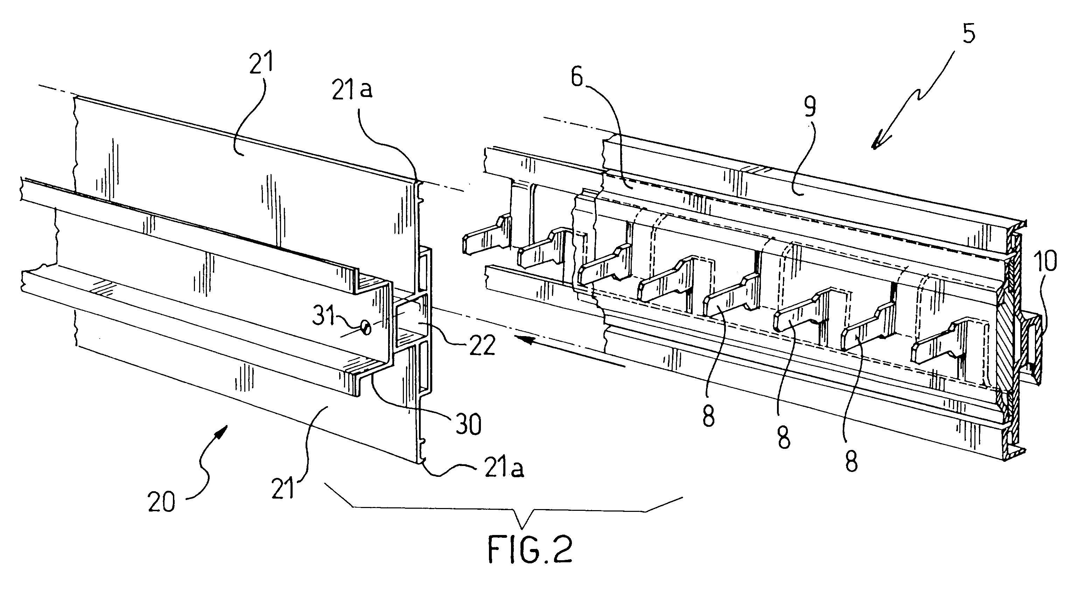

With reference therefore to these figures a switchboard according to the invention is generally indicated with the reference numeral 1; it includes a box-like housing 2 within which, at a rear wall 3, an electrically conductive bus bar 5 is mounted. More precisely this bus bar, as can be seen in Figure 2, includes a sheath 6 of insulating material from which project contact blades 8; the sheath 6 is in turn fitted in a holder 9 from which it can be extracted for replacement.

On the opposite side from the sheath 6 and the contacts 8, the holder 9 is provided with a projection 10 which extends along the whole of its length; this projection is also provided with an end 10a provided with ribs the function of which will be explained in more detail hereinafter.

The bus bar 5 thus constituted is mounted on a suitable support 20 provided with flat flanges 21 on opposite sides of a central tubular body 22; more particularly, for descriptive simplicity, only one of these flanges 21 is shown in the drawings in slidable coupling with the projection 10 which constitutes a guide for the sliding thereof.

Obviously the considerations explained here are also valid for the other flange.

Finally, therefore, the flange 21 is also a guide for sliding of the bus bar 5 itself with respect to the support 20. Furthermore, the flanges 21 are also provided with an end 21a of conjugate form with that of the projection, which forms with this a snap engageable coupling adapted to prevent separation of the bus bar from the support in a direction perpendicular to the sliding direction.

The support 20 is in turn fixed by means of screws 31 to a rail 30 on which a plurality of switches 32 are mounted in a stack.

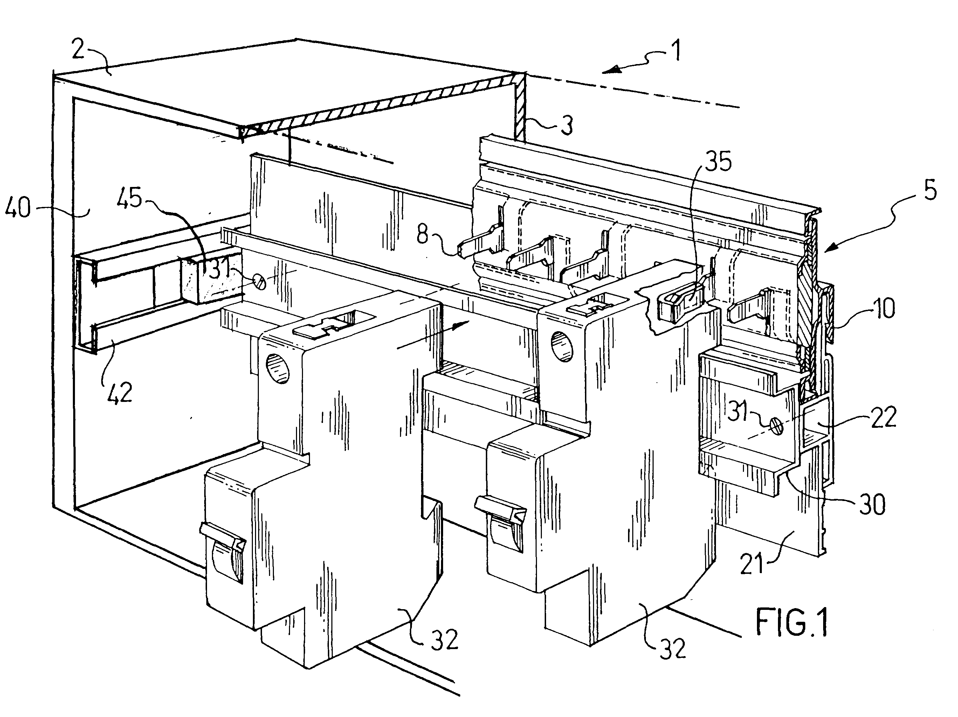

Both the switches and the rail just mentioned are of the type already illustrated in document EP-A-0 434 964 considered above; therefore, without dwelling on a thorough examination of the structural details in a specific manner it is indicated here only how the first are provided with fork contacts 35 which represent the above-mentioned socket means, and the second is provided at its ends with means, known per se, for fixing it into the housing 2. These means are constituted by brackets 45 which can be fixed, for example by screws, along guides 42 disposed on the side walls 40 of the housing itself (for greater clarity of the drawing only a single side wall is shown in Figure 1 with its associated guide, but the shape of the housing is to be considered as being symmetrical with respect to the section plane of the Figure).

For assembly of the switchboard described above the electrically conductive bus bar 5 with its sheath 6 fitted in the associated holder 9 is coupled to the support 20 by making the projection 10 slide along the flange 21 of the support itself (see the direction of the arrow in Figure 2). Further, by means of the screws 31 the support 20 is fixed securely to the rail 30 and putting the entire unit thus formed by the support 20 the rail 30 and the bus bar 5 into operation is effected simply and in a rapid manner by locking the brackets 45 on the guides 42.

Once the rail is fixed in the housing the bus bar 5 retains the possibility of sliding along the flanges 21 although this sliding will depend, obviously, on the length of the bus bar itself: it is in fact evident that when it is as long as the rail, and therefore in substance as long as the distance between the guides 42, there is no possibility of significant movement. The switches 32 are then fitted in a packed arrangement on the rail 30 similar to what is already known and are simultaneously electrically connected thanks to the blade contacts 8 of the bus bar 5 which is already in position. It is to be observed that the switchboard described above allows the previously explained technical problem to be resolved. In fact, it is immediately seen that the bus bar 5 being mounted together with the rail 30 does not have to be fixed to the walls of the housing: this makes it possible to dispense with the presence of holes and/or seats as well as the operations necessary to form them in the housing, which leads to the indicated disadvantages of the prior art.

It is also to be emphasised that the coupling of the bus bar to the support, in turn fixed securely to the rail by the screws 31, makes it possible to utilise the fixing means of this latter for mounting the former; in other words, since current switchboards are already arranged to allow the mounting of the rails within them, the proposed solution of the invention is also adapted to switchboards which are already in commercial use.

Also from the point of view of installation and putting the switchboard into operation many results are achieved by the invention.

First of all, it is to be underlined that the assembly of the bus bar with the support and of this with the rail is effected outside the housing; in practice this avoids having to put them in operation by working within the housing, with all the difficulties of movement due to the restricted spaces which, as known, characterise them (see in this respect also the document EP-A-0 434 964 already mentioned). In fact it should be born in mind that in the described example the single operation to be performed within the housing by an installer is that of fixing the brackets of the rail to the guides in the housing and this is done from the front of the switchboard.

Further to the advantages discussed hereinabove, it is necessary to indicate how having the conductive bus bar mounted on a support fixed to the rail contributes to the correct mutual positioning between the blade contacts of the bus bar and the switches applied to the rail; it is, in fact, evident that an installer must simply assemble together ready pieces without having to perform particular operations at the site where the switchboard is to be mounted. To this end it should be borne in mind that, in relation to the example described hereinabove, the holes for the screws 31 on the rail are made industrially conforming to those on the support thus ensuring correct positioning and fixing. Finally, another advantageous aspect of the invention is constituted by the sliding coupling of the electrically conductive bus bar with the support flange; it must, in fact, be borne in mind how the configuration of the switchboards can change over time, for example because of the addition of other modular switches or by the installation of electrical installation components such as voltmeters, amperometers, timers etc in relation to possible extensions or modifications of the installation of which they form part. All the components to be added are fitted on the rail in the previously seen packed arrangement; consequently it could be necessary to modify the initial position of the switches along the rail, for example by displacing them towards the left or the right with reference to the attached Figure 1. The slidable coupling of the bar with the support allows its immediate displacement with the maximum ease without having to dismantle or remove it. Further, the switchboard of the invention has a considerable flexibility as far as its maintenance is concerned. In fact, the ease with which it is installed is brought advantageously to mind whenever it is necessary, for example, to replace the electrically conductive bus bar due to an operating defect, or increase its number of contact blades or vary its polarity; therefore, in similar circumstances it is sufficient to perform in reverse the switchboard installation steps seen hereinabove, in order to achieve this object. It is to be underlined how the possibility of uncoupling the bus bar and replacing it with speed by making it slide along the support leads to a considerable saving of time.

In addition it must be considered how the provision of the housing for containing the bus bar contributes to a rationalisation of production and the limitation of the costs of this specific component: in fact, it is evident that the bus bar could be made in a single piece, that is to say without the holder 9, by forming the projection 10 directly on the rear part of the sheath. This would have as a direct consequence that of having to form the bus bar, with sheath and associated incorporated projections, according to the various dimensions and/or polarities necessary to satisfy the possible different requirements.

The production in one piece with similar characteristics is certainly more complex and expensive than that of a bus bar provided with a simple sheath as in the invention; in this latter case then a single holder can be used for the same switchboard as long as it has sufficient dimensions, wherein from time to time the desired sheath can be replaced. From what has been explained above the further and significant advantage achieved by the invention is therefore evident, which relates to the production and the cost of replacement of electrically conductive bus bars. With the use of the holder it is in fact possible to achieve simple sheaths of low cost; furthermore, the introduction of a standard form for the sheaths themselves is facilitated, determined on the basis of the chosen width for the holder: it is in fact apparent how once this width is chosen, in order to satisfy the different production requirements for the electrically conductive bus bars it is sufficient to vary only the length of the sheaths, the number and/or polarity of the contacts (in relation to this latter point see document EP-A-0 434 964 for two examples of electrically conductive bus bars).

Naturally, variants other than the embodiments of the invention set out in the described example are not excluded.

In this sense a possible alternative from what has been seen could be represented by a switchboard in which the rail 30 and the support 20 were formed in one piece; for example this could be the case if both these elements were made of plastics material by moulding or other process.

Furthermore, the means for fixing the rail in the housing could be different from the brackets 45 to be screwed to the guides 42; in consequence of this, also, adaptive modifications of the support and/or of the bus bar are not to be excluded. To this end the possibility of using screws 31 similar to those of the example given above but extending also into the support 20 and able to engage in prearranged holes in the housing is not to be excluded in any case.

As far as the electrically conductive bus bars are concerned it has already been said how they could also be produced in one piece, that is to say without the holder; it is, however, not to be excluded that the type of removable coupling to the support can differ from the coupling indicated. In such circumstances it can be foreseen that the shape of the projection and of the support can be also subject to variations.

## Claims

1. A distribution and protection switchboard for electrical installations which includes a rail (30) fixed in a box-like housing (2), a plurality of modular automatic switches (32) which can be installed in a packed arrangement on the rail (30) in a direction substantially perpendicular to the rear wall (3) of the housing (2), and being electrically connected simultaneously by plug and socket type means (8, 35) to an electrically conductive bus bar (5) which is interposed between the wall (3) and the switches (32) and is removably coupled to a support (20) fixed to the rail (30),
characterised in that the bus bar (5) is slidably coupled, in a longitudinal sense, with the support (20).

2. A switchboard according to Claim 1, characterised in that the support (20) includes a central body (22) fixed to the rail (30) from which extends a flange (21) constituting a guide for slidable coupling with a projection (10) of the bus bar (5).

3. A switchboard according to Claim 2, characterised in that the said flange (21) and projection (10) are provided with respective conjugate ends (21a, 10a) which can be mutually engaged forming a snap-engaging hook.

4. A switchboard according to any of Claims from 1 to 3, characterised in that the bus bar (5) comprises a sheath (6) from which projects a plurality of contacts (8) which can be inserted into a holder (9) provided with means (10, 10a) for removably coupling with the said support (20).

5. A switchboard according to Claim 4 when dependent on Claims 2 or 3, characterised in that the said projection (10) is on the holder (9).

6. A switchboard according to any of the preceding Claims, characterised in that the support (20) is made integrally with the rail (30).

## Patentansprüche

1. Verteiler- und Sicherungs-Schalttafel für Elektroinstallationen, welche eine Schiene (30) umfaßt, die in einem kastenförmigen Gehäuse (2) befestigt ist, mehrere Modul-Automatik-Schalter (32), die in einer paketierten Anordnung auf der Schiene (30) in einer Richtung im wesentlichen senkrecht zur Rückwand (3) des Gehäuses (2) installiert werden können und die gleichzeitig über eine Stecker- und Steckfassungseinrichtung (8, 35) mit einer elektrisch-leitenden Sammelschiene (5) verbunden sind, die zwischen der Wand (3) und den Schaltern (32) angeordnet ist und die an einen Träger (20), der an der Schiene (30) befestigt ist, abnehmbar angekoppelt ist,
**dadurch gekennzeichnet**, daß
die Sammelschiene (5) an dem Träger (20) in einer Längsrichtung verschiebbar angekoppelt ist.

2. Schalttafel nach Anspruch 1, dadurch gekennzeichnet, daß der Träger (20) einen Zentralkörper (22) umfaßt, der an der Schiene (30) befestigt ist, von dem sich ein Flansch (21) erstreckt, der eine Führung zum verschiebbaren Ankoppeln an einen Ansatz (10) der Sammelschiene (5) bildet.

3. Schalttafel nach Anspruch 2, dadurch gekennzeichnet, daß der Flansch (21) und der Ansatz (10) mit entsprechenden gepaarten Enden (21a, 10a) versehen sind, die wechselseitig in Eingriff kommen können, die eine Rastverbindung bilden.

4. Schalttafel nach einem der Ansprüche 1 bis 3, dadurch gekennzeichnet, daß die Sammelschiene (5) einen Mantel (6) umfaßt, von dem sich mehrere Kontakte (8) erstrecken, die in einen Halter (5) eingeführt werden können, der mit der Einrichtung (10, 10a) zum abnehmbaren Ankoppeln an den Träger (20) versehen ist.

5. Schalttafel nach Anspruch 4, wenn dieser von den Ansprüchen 2 oder 3 abhängig ist, dadurch gekennzeichnet, daß der Ansatz (10) auf dem Halter (9) angeordnet ist.

6. Schalttafel nach einem der vorhergehenden Ansprüche, dadurch gekennzeichnet, daß der Träger (20) einstückig mit der Schiene (30) ausgebildet ist.

## Revendications

1. Tableau de distribution et de protection pour des installations électriques, qui comprend un rail (30) fixé dans une enceinte (2) analogue à une boîte, plusieurs commutateurs automatiques modulaires (32) qui peuvent être mis en place dans un agencement serré sur le rail (30) dans une direction sensiblement perpendiculaire à la paroi arrière (3) de l'enceinte (2), et connectés électriquement en même temps par des moyens (8, 35) du type à fiches et douilles à une barre bus électriquement conductrice (5) qui est interposée entre la paroi (3) et les commutateurs (32) et qui est accouplée de façon amovible à un support (20) fixé au rail (30), caractérisé en ce que la barre bus (5) est accouplée de façon coulissante, dans un sens longitudinal, au support (20).

2. Tableau selon la revendication 1, caractérisé en ce que le support (20) comprend un corps central (22) fixé au rail (30), à partir duquel s'étend une aile (21) constituant un guide pour un accouplement coulissant avec une saillie (10) de la barre bus (5).

3. Tableau selon la revendication 2, caractérisé en ce que ladite aile (21) et ladite saillie (10) sont pourvues d'extrémités conjuguées respectives (21a, 10a) qui peuvent être enclenchées mutuellement, formant un crochet d'encliquetage.

4. Tableau selon l'une quelconque des revendications 1 à 3, caractérisé en ce que la barre bus (5) comporte une gaine (6) de laquelle font saillie plusieurs contacts (8) qui peuvent être insérés dans un élément (9) de maintien pourvu de moyens (10, lOa) pour un accouplement amovible avec ledit support (20).

5. Tableau selon la revendication 4, lorsqu'elle dépend des revendications 2 ou 3, caractérisé en ce que ladite saillie (10) se trouve sur l'élément (9) de maintien.

6. Tableau selon l'une quelconque des revendications précédentes, caractérisé en ce que le support (20) est réalisé de façon intégrée avec le rail (30).
